# EUROPEAN PATENT APPLICATION

(11) **EP 4 542 313 A1**
(43) Date of publication of application: **23.04.2025**
(21) Application number: 23204403.2
(22) Date of filing: 18.10.2023
(51) Int. Cl.: G05B 17/02, G06F 9/50, H04L 41/0894

(54) **METHOD OF CONFIGURING A DIGITAL TWIN ABSTRACTION INTERFACE AND A DIGITAL TWIN ABSTRACTION INTERFACE**

(71) Applicant: Siemens Aktiengesellschaft, 80333 München (DE)
(72) Inventor: Blenk, Andreas, 86916 Kaufering (DE); Zeiger, Florian, 85635 Höhenkirchen-Siegertsbrunn (DE)
(74) Representative: Siemens Patent Attorneys

(57) **Abstract**

The invention is concerned with a method of configuring a digital twin abstraction interface module (13) to establish a digital twin operator session to operate a digital twin (3, 4), wherein the digital twin (3, 4) is representing a physical system (5), the method comprising following steps performed by the digital twin abstraction interface module (13). Receiving a twin operation intent request message (n1) comprising a twin operation intent (20); Mapping an intent priority (23) to the twin operation intent (20); investigating a designated resource set comprising at least one physical resource (12) of the physical system (5). For each of the at least one physical resource (12) of the designated resource set, creating a respective link between the respective physical resource (12) and the twin operation intent (20) in a physical resource map, wherein the respective link is assigned the intent priority (23) of the twin operation intent (20) .

## Description

The invention is concerned with a method of configuring a digital twin abstraction interface, a method of operating a digital twin abstraction interface and a digital twin abstraction interface.

A digital twin is a digital representation of a physical object or a physical system. The digital twin is used to characterise a current state of the physical object or the physical system. The digital twin is also used to represent and to characterise the current state of a digital asset object or a metaverse. In order to synchronise the current state of the digital twin with the current state of the physical object or the physical system, respectively the digital asset object or the metaverse, the digital twin is provided with object dependent update data describing the current state of the physical object or the physical system, respectively the digital asset object or the metaverse. The update data may comprise sensor data or operational data of the physical object. The use of digital twins enables monitoring of the physical object or physical system, respectively the digital asset object or the metaverse.

Digital twins are now used in many operational services such as design, testing, maintenance monitoring and failure prediction. Due to the successful application and use of digital twins in many application areas, more and more physical components are being digitised and digital counterparts are being created. One example is digital twins of physical networks, leading to the creation of so-called digital network twins.

A digital network twin (digital twin) is connected to one or more network components. Together, these components represent and provide a functionality of the physical network. The digital network twin can be the digital representation of a single network device, such as a network switch or router. It can also represent pre-defined parts of the physical network, or the entire physical network consisting of many network elements. The desired functionality of the digital network twin depends on the scope of the operator creating the digital network twin. For example, an operator may request a complete view of a network element, including ingress queues, traffic managers and egress queues. The operator could also request an abstract view of a network element. In the second case, a digital network twin may only represent the ingress and egress behavior of network packets, for example, on which ports packets enter, how long they are processed, and on which ports packets leave a switch. In this case, the inner workings and performance modelling are abstracted. In a third scenario, an operator may require a complete abstract view of a network, such as an industrial network connecting field levels with data center infrastructure, or an autonomous system consisting of multiple routers. In this case, the entire network could again be represented as a digital model describing only the ingress and egress relationship for network packets.

Digital network twins are described in the publication "Digital Twin Network: Concepts and Reference Architecture" published by the Internet Research Task Force.

Problems may arise when multiple digital network twin operators want to simultaneously use their digital twins to also control the behavior and actions of the physical system represented by the digital twins. For instance, a digital network twin operator might want to update a forwarding behavior of a switch or want to change a frequency of how fast a switch might collect and send monitoring information to throttle a CPU consumption of a switch. In case two digital network twin operators want to change the behavior of their digital network twins in the physical and/or digital world, methods are needed that coordinate this decision-making process.

The publication Polverini et al., M. Polverini, F. G. Lavacca, J. Galán-Jiménez, D. Aureli, A. Cianfrani and M. Listanti, "Digital Twin Manager: A Novel Framework to Handle Conflicting Network Applications," 2022 IEEE Conference on Network Function Virtualization and Software Defined Networks (NFV-SDN), Phoenix, AZ, USA, 2022, pp. 85-88, proposes a module for a SDN controller that uses a digital twin of a network for planning communication flows. The module is called Digital Twin Manager and aims at evaluating effects of operational changes provided by concurrent network applications by means of a Digital Twin Network, interconnecting several Digital Twins. The Digital Twin Manager updates a digital network status in physical-time and evaluates a feedback information provided by the digital applications.

The solution provided in the publication does not provide a mechanism to map intents at planning time and during runtime to network resources for industrial scenarios. The solution does not resolve conflict situations automatically but rather relies on manual configurations. The situation describes in the publication is not about users accessing, e.g., simultaneously the same digital network twin but rather about users accessing digital network twins without resource interference. The solution focusses on the networking connecting digital network twins and not on digital network twins representing networks and assets. The solution does not have an admission control and does not provide a user notification.

It is an object of the present invention to provide a solution for resolving operation conflicts in case digital network twin operators operate in a multi-digital twin environment like e.g. an industrial metaverse on a shared physical infrastructure.

A first aspect of the invention is related to a method of configuring a digital twin abstraction interface to establish digital twin operator session to operate a digital twin. In other words, the first aspect is related to the configuration of the digital twin abstraction interface. The configuration of the digital twin abstraction interface is intended to establish a digital twin operation session to allow a twin operator to operate the digital twin. The digital twin is representing a physical system. The physical system may be a digital network or another system comprising physical objects.

The method comprises the following steps performed by the digital twin abstraction interface.

The method of configuring a digital twin abstraction interface comprises a step of receiving a twin operation intent request message. The twin operation intent request message comprises a twin operation intent specifying a task of the digital twin operator session.

In other words, in said step of the method of configuring the digital twin abstraction interface, the twin operation intent request message is received by the digital twin abstraction interface. The twin operation intent request message may be sent by the digital twin operator. The twin operation intent request message comprises the twin operation intent. The twin operation intent specifies the task of the digital twin operator session that is intended by the twin operator. In other words the twin operation intent may specify the task of the digital twin operator session to operate the digital twin. The twin operation intent may set an abstraction level of the digital twin representing the physical system and or operations intended during the digital twin operation session.

A next step comprises a mapping of a priority to the twin operation intent in a priority mapping procedure by the digital twin abstraction interface. The intent priority assigns a priority to the twin operation intent in an allocation of physical resources by the abstraction layer. In other words, the abstraction layer assigns the physical resources to respective twin operation intentions. Conflicts may arise during the assignment process. This may mean that the same physical resource is needed by at least two of the twin operation intentions to fulfil their respective tasks. The allocation of said physical resource is done depending on the respective intent priorities of the at least two twin operation intents. In doing so, the resource is allocated to the twin operation intention which is assigned a higher priority in each case according to its intention priority.

In other words, in said step of the method of configuring the digital twin abstraction interface, the digital twin abstraction interface may examine the priority of the twin operation intent in the priority mapping procedure. The priority mapping procedure may comprise sub-steps for evaluating the priority of the twin operation intent depending on the task of the twin operation intent, the twin operator, a current state of the physical system, and/or the physical resources required to perform the task itself.

A next step comprises an investigation of a designated resource set comprising at least one physical resource of the physical system for accomplishing the task of the digital twin session in a physical resource mapping procedure. In other words, to provide the digital twin operator session to operate the digital twin, the respective designated resource set comprising the at least one physical resource of the physical system, necessary for the task is investigated by the digital twin abstraction interface. The physical resource mapping procedure may comprise sub steps to investigate and to select the at least one physical resource of the physical system to perform the task in the digital twin session. The selection of the designated resource set may depend on the task, the priority of the twin operation intent and/or an availability of the physical resources of the physical system.

The next step is to create a link between the physical resource and the operation intent in a physical resource map. The link may also be called an association. The respective link is assigned the priority of the respective operation intent. In other words, the at least one physical resource of the designated resource set of the twin operation intent is assigned to the twin operation intent. The physical resource map is provided to manage the links of the physical resources to the twin operation intents. To associate the respective resource with the respective intent, the respective association is created in the physical resource map, associating the respective resource with the respective intent. The physical resource map can be a database containing links as corresponding entries. The respective link is assigned the priority of the respective operation intent. In other words, the respective link created includes the respective priority, where the priority is the same as the operation intent to which it is linked. Therefore, the physical resource map stores the links of the physical resources to the twin operation intents, wherein the respective links comprise the priority of the assigned twin operation intent.

In a next step, the digital twin operator session is initiated by the digital twin abstraction interface according to the twin operation intent. The initiation of the digital twin operator session may comprise a creation of the respective digital twin and or the selection of an available twin. The initiation of the digital twin operator session may comprise a provision of an operator interface at the digital twin abstraction interface or a respective digital twin module to allow the twin operator to operate the digital twin.

The invention has the advantage that the assignment of the physical resource sets comprising the physical resources of the physical system to twin operation intents is performed centrally by the digital twin abstraction interface. The centralisation of the assignment, combined with the use of intent priorities allows avoiding possible resource conflicts when operating multiple twins of the same physical system.

According to a further embodiment of the invention, the priority of the twin operation intent is selected in the priority mapping procedure depending on the task of the digital twin session. In other words, the digital twin abstraction interface selects the priority of the twin operation intent depending on the task of the digital twin session. It may be possible that predefined task groups are provided in the digital twin abstraction interface. The task groups may comprise respective tasks, wherein the task groups are assigned to respective priorities. As an example, one of the task groups may comprise tasks related to a maintenance of the physical system. This task group may be associated with a higher priority than a task group comprising tasks related to a monitoring or a default operation of the physical system. The embodiment has the advantage that the intended twin operations may be prioritized according to their importance to the operation of the physical system.

According to a further embodiment of the invention the priority of the twin operation intent is selected depending on a requested priority of the twin operation intent request message. In other words, the twin operator may provide a requested priority to the digital twin abstraction interface in the twin operation intent request. The digital twin abstraction interface may use the requested priority as the priority of the twin intent if specific conditions are fulfilled. The embodiment has the advantage that a twin operator may influence the priority of his intent.

According to a further embodiment of the invention, the priority of the twin operation intent comprises a first label and a second label, wherein the second label designates the priority of the twin operation intent within the respective first label. In other words, the priority of the twin operation intent comprises two levels. The first label may be the main label of the two labels for setting the priority of the twin operation intent. The first label may depend on the task of the twin operation intent. The second label describes the priority of the twin operation intent within twin operation intents assigned the same priority by the first label. In other words, the second label sets the priority of the twin operation intent of twin operation intents within the same group of the same first label. The second label may depend on an order of receipt of the respective twin operation intent. The embodiment has the advantage that the priority of the respective intents may be set according to the task and according to an order of receipt of the respective twin operation intents.

According to a further embodiment of the invention the priority of at least one other twin operation intent is changed during the priority mapping procedure for the twin operation intent. In other words, the twin abstraction interface changes the priority of the at least one other twin operation intent during the priority mapping procedure of the twin operation intent. The change of the priority of the at least one other twin operation intent may be performed to allow a coordination of a physical resources to the twin operation intents. The other twin operation intent may have the same first priority label as the twin operation intent. To coordinate the allocation of the physical resources between the two operation intents of the same first priority label, the twin abstraction interface may assign the second priority label to the twin operation intent and other twin operation intent and the intent.

According to a further embodiment of the invention the physical resource mapping procedure comprises the following steps performed by the twin abstraction interface.

In the physical resource mapping procedure, the twin abstraction interface investigates the designated resource set for accomplishing the task of the digital twin session according to a primary criterion. The primary criterion requires that the at least one physical resource is not assigned a link in the physical resource map. In other words there may be other twin operation intents assigned to the respective physical resources of the physical system in the physical resource map. Therefore there may be physical resources which are linked to respective twin operation intents and physical resources that are not linked to any of the twin operation intents. When the twin operation intent is received by the twin abstraction interface, the twin abstraction interface has to select the at least one physical resource of the designated resource set for accomplishing the task of the digital twin session. There may be several physical resources suitable for accomplishing the task. According to the primary criterion, the twin abstraction interface is only allowed to assign physical resources to the twin operation intent that are not linked to any of the twin operation intents. The advantage of embodiment is that conflicts between different digital twin sessions can be avoided through the selection of only unlinked physical resources. It may be possible to configure the twin abstraction interface to select logical, physical, or time-independent physical resources for the respective digital twin sessions whenever possible.

According to a further embodiment of the invention, the twin abstraction interface investigates the designated resource set for accomplishing the task of the digital twin session according to a secondary criterion. The secondary criterion requires that the at least one physical resource is either not assigned a link in the physical resource map or that the at least one physical resource is assigned a link in the physical resource map comprising a lower priority than the twin operation intent. In other words there may be other twin operation intents assigned to the respective physical resources of the physical system in the physical resource map. Therefore there may be physical resources which are linked to respective twin operation intents and physical resources that are not linked to any of the twin operation intents. As the links have a respective priority, a respective link may have a lower, a same or a higher priority than the twin operation intent. According to the secondary criterion, the twin abstraction interface is only allowed to assign physical resources to the twin operation intent that are either not linked to any of the twin operation intents or that are linked to another twin operation intent of a lower priority than the twin operation intent. However, the secondary criterion may also include selecting an unlinked physical resource if possible. The advantage of the embodiment is that the twin operation intent can be prioritized over intents of lower priority.

According to a further embodiment of the invention, the twin abstraction interface investigates the designated resource set for accomplishing the task of the digital twin session according to a tertiary criterion. The tertiary criterion requires that the at least one physical resource is either not assigned a link in the physical resource map or that the at least one physical resource is assigned a link in the physical resource map comprising a lower priority than the twin operation intent or a same priority as the twin operation intent. In other words, according to the tertiary criterion, the twin abstraction interface is only allowed to assign physical resources to the twin operation intent that are either not linked to any of the twin operation intents or that are linked to another twin operation intent of a lower priority than the twin operation intent or to a twin operation intent of a same priority. However, the tertiary criterion may also include selecting an unlinked physical resource if possible or selecting a link of a lower priority if possible. The advantage of the embodiment is that the twin operation intent can be prioritized over intents of lower priority. If another link has the same priority, the priority of the existing link and the link of the twin operation intent can be set by their respective second labels. It is possible for the link of the twin operation intent to be assigned the second priority label with a lower priority than the pre-existing link.

According to a further embodiment of the invention, the physical resource mapping procedure comprises a step of reinvestigating a respective designated resource set of at least one of the twin operation intents in connection with the at least one physical resource. In other words, when a link is provided to a resource already linked to another intent, the digital twin interface may change the resource set of the other twin operation intent. It may be necessary and possible for a particular resource to be used by the older twin operation intent. The new twin operation intent may require the resource to perform the task.

A second aspect of the invention is related to a method to operate a digital twin in a digital twin operation session of the digital twin operation intent. The digital twin represents a physical system. The session may be established by the digital twin abstraction interface in a method according to the first aspect of the invention.

The method comprises the following steps performed by a digital twin abstraction interface.

A step comprising receiving a session control command message comprising an update request to provide twin update data to update twin data of the digital twin in accordance with session update data.

In other words in the step the digital twin abstraction interface receives the session control command message. The session control command message may be provided by a twin operator of the respective twin operation session. The session control command message comprises the update request to provide the twin update data to update the twin data of the digital twin according to the session update data.

In other words the session control command message comprises the session update data. The session update data may be related to the update of twin data of the digital twin. The session update data are configured to change the digital twin data to change a current state of the digital twin and/or to perform a task by the digital twin. The session update data may be generic related to the update of the twin data. In other words, the session update data may be abstracted and intended to change the twin data, and thereby also change the corresponding physical data of the physical system. In that the twin abstraction layer allocates the respective physical resources and abstracts between the digital twins and the physical system, it is necessary for the twin abstraction layer to concretize the session update data for the physical resources allocated to the session. The twin update data to be generated is intended to update the twin data according to the allocated physical resources.

Since the digital twin abstraction interface coordinates different digital twins, the twin data may not be updated directly by the twin operator to avoid conflicts between different twins. Therefore, the session update data can describe the intended updates of the twin data in a more general way.

A next step comprises a generation of the twin update depending session update data as a function of the physical resource map comprising the respective link between the at least one physical resource and the twin operation intent.

In the next step, the digital twin abstraction interface sends a twin control command message containing the twin update data to the digital twin module that hosts the digital twin data of the digital twin of the digital twin session.

According to a further embodiment of the invention, the method comprises a step of checking the session update data for compatibility with the physical resource map. In other words, it may be possible that the operation of the session update data requires a physical resource that is not assigned to the respective twin operation session and/or that is currently assigned to another twin operation intent. Therefore, the twin abstraction interface may refuse to provide the twin update data.

According to a further embodiment of the invention, the method comprises receiving monitoring data from the physical system relating to at least one physical resource through the twin abstraction interface. The monitoring data may describe a current state of the physical resource. The twin abstraction interface receives the monitoring data. The twin abstraction interface associates the monitoring data with the twin operation intent associated with the respective physical resource that provided the monitoring data.

In a next step, the twin abstraction interface may transmit the monitoring data to the digital twin module that hosts the digital twin data of the digital twin of the twin operation intent associated with the corresponding physical resource.

For use cases or use situations that may arise during the procedure according to the first or the second aspect of the invention and that are not explicitly described here, it may be provided that, according to the respective procedure, an error message and/or a request for user feedback is issued and/or a default setting and/or a predetermined initial state is set.

A third aspect of the invention is related to a digital twin abstraction interface.

The digital twin abstraction interface is configured to establish a digital twin operator session to operate a digital twin. The digital twin is representing a physical system. The digital twin abstraction interface is configured to receive a twin operation intent request message comprising a twin operation intent specifying a task of the digital twin operator session. The digital twin abstraction interface is configured to map a priority to the twin operation intent according to a priority mapping procedure in a priority map. The digital twin abstraction interface is configured to investigate a designated resource set comprising at least one physical resource of the physical system for accomplishing the task of the digital twin session, in a physical resource mapping procedure. The digital twin abstraction interface is configured to for each of the at least one physical resource of the designated resource set, create a respective link between the respective physical resource and the operation intent in a physical resource map, wherein the respective link is assigned the priority of the operation intent. The digital twin abstraction interface is configured to initiate the digital twin operator session.

According to a further embodiment of the digital twin abstraction interface, the digital twin abstraction interface is configured to receive a session control command message comprising an update request to provide twin update data to update twin data of the digital twin according session update data. The digital twin abstraction interface is configured to generate the twin update data depending on the session update data as a function of a physical resource map comprising a respective link between at least one physical resource and the twin operation intent. The digital twin abstraction interface is configured to send a twin control command message comprising the twin update data to a digital twin module providing the digital twin data of the digital twin.

Independent of the grammatical term usage, individuals with male, female or other gender identities are included within the term.

The term module can be understood as a hardware module or as a software module. In particular, a module may also comprise a hardware and a software portion implemented on the hardware.

A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

A computing unit may in particular be understood as a data processing device, which comprises processing circuitry. The computing unit can therefore in particular process data to perform computing operations. This may also include operations to perform indexed accesses to a data structure, for example a look-up table, LUT. In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.
- FIG 1: shows a schematic illustration of a method to operate two digital twins representing a same physical system according to the state of the art;
- FIG 2: shows a schematic illustration of a method to operate two digital twins representing a same physical system according to the state of the art;
- FIG 3: shows a schematic illustration of a method according to the state of the art;
- FIG 4: shows a schematic illustration of a digital twin abstraction interface;
- FIG 5: shows a schematic illustration of a method to configure a digital twin abstraction interface; and
- FIG 6: shows a schematic illustration of a method to operate a digital twin abstraction interface.

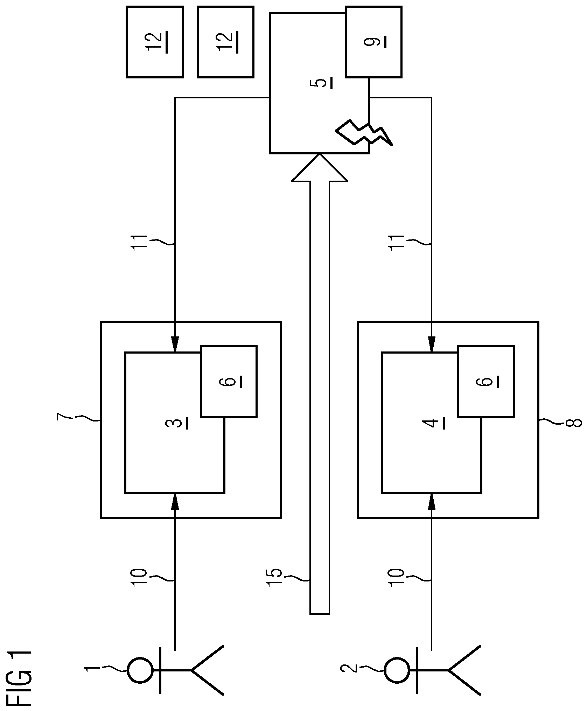

FIG 1 shows a schematic illustration of a method to operate two digital twins representing a same physical system according to the state of the art.

FIG 1 shows a first digital twin operator 1 and a second digital twin operator 2. The first twin operator may operate a first digital twin 3 in a first digital twin session. The second digital twin operator 2 may operate a second digital twin 4 in a second digital twin session. The first digital twin 3 and the second digital twin 4 may represent a same physical system 5. The physical system 5 may be a communication network system or a machine. The physical system 5 may comprise one or more physical assets. Twin data 6 specifying a current state of the respective digital twin 3, 4 are stored in a respective digital twin module 7, 8. In other words, the current state of the respective digital twin 3, 4 of the physical system 5 is described in the twin data 6, stored in the twin module 7, 8 of the respective digital twin 3, 4. To represent the current state of the physical system 5, the digital twin data 6 are synchronised with physical data 9 of the physical system 5, describing a current state of the physical system 5.

The first digital twin operator 1 and the second digital twin operator 2 may operate their respective digital twins 3, 4 in parallel. The digital twin operators 1, 2 may provide respective twin update data 10 to the respective digital twin 1, 2 to update the twin data 6 of the respective digital twin 3, 4. The physical data 9 of the physical system 5 may be synchronized with the updated digital twin data 6. The synchronisation may be performed by physical update data 11 provided to the physical system 5 by the digital twins 3, 4. In this way, the physical system 5 may be controlled by the twin operators 1, 2 through the digital twins 3, 4.

The twin operators 1, 2 may operate their digital twins in parallel 3, 4. Therefore the physical system 5 may receive physical update data 11 of both of the digital twins 3, 4. The physical system 5 may update the physical data 9 according to the physical update data 11.

However, the update of the physical data 9 according to the physical update data 11 may only be free of conflicts if the respective physical update data 11 address respective physical resources 12 of the physical system 5 that are different or do not depend on each other. Otherwise, the digital twins 3, 4 may provide conflicting physical update data 11 to the physical system 5.

Conflicts may arise when multiple of the twin operators 1, 2 want to simultaneously use their digital twins 3, 4 to control the behavior and actions of the physical counterparts of the physical system 5, e.g. the elements which are represented by the digital twins 3, 4. For instance, one of twin operators 1, 2 might want to update the physical data 9 related to the forwarding behavior of a switch or want to change the frequency of how fast a switch might collect and send monitoring information to throttle the CPU consumption of a switch. In case two of the twin operators 1, 2 want to change the behavior of their digital twins 3, 4 in the physical and/or digital world, methods are needed that coordinate this decision-making process.

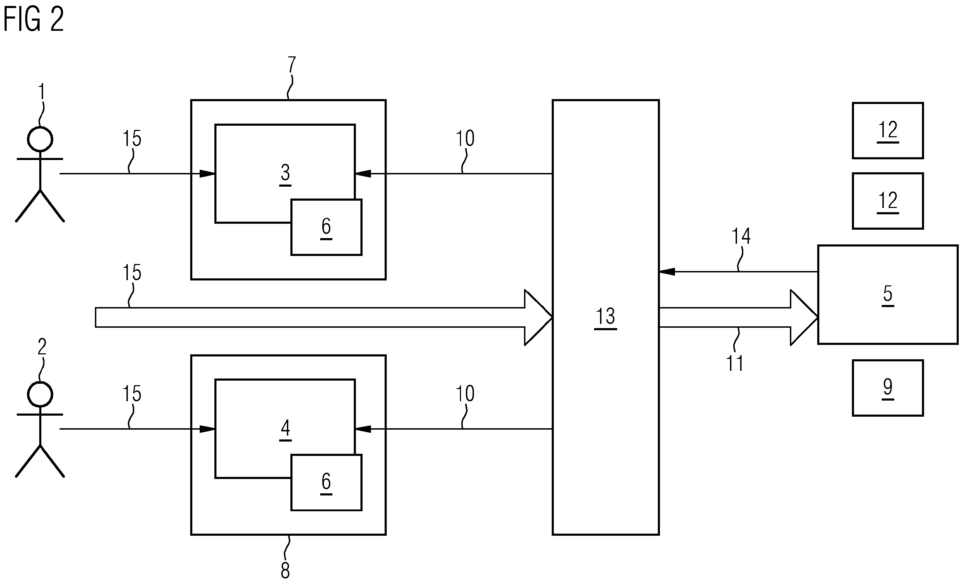

FIG 2 shows a schematic illustration of a method to operate two digital twins representing a same physical system.

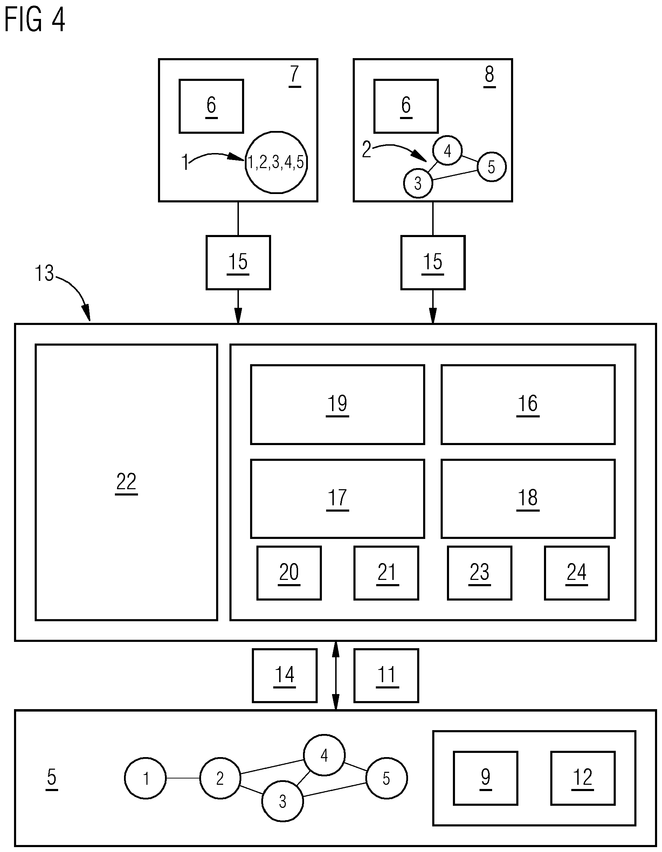

FIG. 2 may illustrate a same situation as FIG. 1. FIG. 2 may illustrate the concept of the solution of the problem that may arise according to the state of the art as shown in FIG. 1. In FIG. 2, a twin abstraction interface 13 is shown. The twin abstraction interface 13 may be a module that acts as an intermediate layer between the physical system 5 and the digital twins 3, 4 used by the digital twin operators 1, 2. A detailed illustration of the twin abstraction interface 13 is shown in FIG 4.

The twin abstraction interface 13 may connect to the physical system 5 and may receive all session update data 15 for the physical system 5.

The twin abstraction interface 13 may generate respective twin update data 10 to update the twin data 6 of the digital twins 3, 4. The twin abstraction interface 13 may be configured to receive the session update data 15 from the twin operators 1, 2 and generate respective twin update data 10 to update the twin data 6 of the digital twins 1, 2 according to the session update data 15. The digital twins 1, 2 may provide physical update data 11 to the physical system 5 to update the physical data 9. The twin abstraction interface 13 may generate the twin update data 10 that avoids conflicts between the digital twins 3, 4.

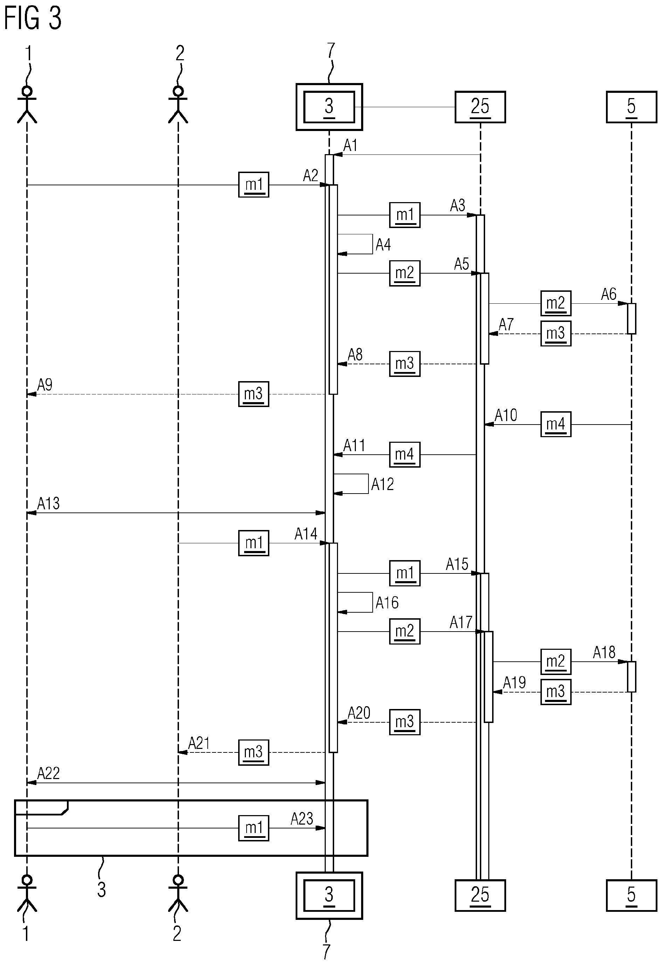

FIG 3 shows a schematic illustration of a method according to the state of the art.

In a first step A1 a network abstraction module 26 may connect to a first digital network twin 3.

In a step A2 a first twin operator 1 may send a digital twin control command message m1 to a twin module 7 of the first digital twin 3. The digital twin control command message m1 may comprise twin update data 10 to update twin data 6 of the first digital twin 3.

Step A3 may comprise a transmission of the digital twin control command message m1 from the digital twin module 7 to the network abstraction module 26.

In a step A4 the digital twin module 7 may update the digital twin data 6 of the first digital twin 3 according to the digital twin update data 10 provided by the first operator 3 in the digital twin control command message m1.

In a step A5 the digital twin module 7 may transmit an update physical asset request message m2 comprising physical update data 11 to the network abstraction module 26, based on the change of the digital twin data 6.

In a step A6 the network abstraction module 26 may transmit the update physical asset request message m2 comprising the physical update data 11 to the physical system 5 to update the physical data 9 of the physical system 5.

After the update of the physical data 9 of the physical system 5 an update acknowledgement message m3 may be sent from the physical system 5 to network abstraction module 26 in a step A7.

After reception of the update acknowledgement message m3 by the network abstraction module 26 the update acknowledgement message m3 may be relayed to the digital twin module 7 in a step A8.

In a step A9 the digital twin module 7 may forward the update acknowledgement message m3 to the first twin operator 1.

In a step A10 the physical system may transmit a monitoring message m4 comprising monitoring data 14 to the network abstraction module 26.

In a step A11 network abstraction module 26 may forward the monitoring message m4 to the digital network twin module 7.

In a step A12 the digital twin module 7 may update the digital twin data 6 of the digital twin 3 according to the monitoring data 14 provided by the physical system 5 in order to sync the twin data 6 with the physical data 9.

In a step A13 the first twin operator 1 may observe the current state of the digital twin 3 as described by the twin data 6 of the digital twin 3. The twin data 6 may comply with the twin update data 10 provided in the digital twin control command message m1 to the digital network twin module 7. Therefore the first operator 1 may not recognise an error.

In a step A14 a second twin operator 2 may send a digital twin control command message m1 to a twin module 7 of the first digital twin 3. The digital twin control command message m1 may comprise the twin update data 10 to update twin data 6 of the first digital twin 3. The twin update data 10 may request an update of the twin data 6, that may conflict with the update of the twin data 6 as specified by the twin update data 10 of the first twin operator 1.

Step A15 may comprise a transmission of the digital twin control command message m1 from the digital twin module 7 to the network abstraction module 26.

In a step A16 the digital twin module 7 may update the digital twin data 6 of the first digital twin 3 according to the digital twin update data 10 provided by the first operator 3 in the digital twin control command message m1.

In a step A17 the digital twin module 7 may transmit an update physical asset request message m2 comprising physical update data 11 to the network abstraction module 26, based on the change of the digital twin data 6.

In a step A18 the network abstraction module 26 may transmit the update physical asset request message m2 comprising the physical update data 11 to the physical system 5 to update the physical data 9 of the physical system 5.

After the update of the physical data 9 of the physical system 5 an update acknowledgement message m3 may be sent from the physical system 5 to the network abstraction module 26 in a step A19.

After reception of the update acknowledgement message m3 by the network abstraction module 26, the update acknowledgement message m3 may be relayed to the digital twin module 7 in a step A20.

In a step A21 the digital twin module 7 may forward the update acknowledgement message m3 to the second twin operator 2.

In a step A22 the first twin operator 1 may observe the current state of the digital twin 3 as described by the twin data 6 of the digital twin 3 again. The twin data may not comply with the twin update data 10 provided by the first twin operator 1 in the digital twin control command message m1 anymore, because the twin update data 10 provided by the second twin operator 2 may have changed the twin data 6.

In a step A23 the first digital twin 1 operator may retransmit its digital twin control command message m1 to the digital network twin module 7 to change the twin data 6 of the digital network twin 3, again.

FIG 3 shows a failure example of the state of the art. According to the process the network abstraction module has successfully connected the digital network twin and the physical system. The first twin operator 1 operates on the Digital Network Twin 3. She sends a control command (A2). The Digital Network Twin 3 sends the control command to a physical asset of the physical system 5 and updates its behavior accordingly. The network abstraction module 26 may act as an intermediate layer and may forward the update command to the physical system 5 (A6). After the update is done in steps A7 to A9, a normal monitoring process may continue as intended. The first twin operator 1 may observe the behavior of the digital twin 3 and does not act, as she observes no conflict or unintended behavior (A10 to A13). With the network abstraction module 26, the second twin operator 2 is also connected to the digital twin 3 for receiving monitoring data 14. The second operator 4 also sends a control command to change the behavior of the digital twin 3 and its physical counterpart A13. The update procedure is like the one of the first operator 1 (A14 to A21). However, after the update of the second twin operator 2, the first twin operator 1 observes an unintended operation of the digital twin 3. Accordingly, the first operator 1 starts the update process of the digital twin 3 again. Without any mechanisms as provided by this disclosure, the whole process may eventually end up in an endless loop. This may even lead to a useless production network.

FIG 4 shows a schematic illustration of a digital twin abstraction interface.

The first digital twin module 7 of the first digital twin 3 may transmit session update data 15 to the digital network twin abstraction interface 13 wherein the session update data 15 may describe changes of the digital twin data 6 of the first digital twin 3.

The second digital twin module 8 may transmit respective session update data 15 to the digital network twin abstraction interface 13 wherein respective session update data 15 comprise changes of the digital twin data 6 of the second digital twin 4.

The digital network twin abstraction interface 13 may transmit physical update data 11 to the physical system 5. The physical update data 11 may be configured to update the physical data 9 of the physical system 5 according to the session update data 15, wherein the physical update data 11 generated by the digital network twin abstraction interface 13 may allow a conflict free update of the physical data 9 of the physical system 5.

FIG 4 also illustrates an overview of the digital network twin abstraction interface 13 and its modules. The digital network twin abstraction interface 13 introduces modules to resolve conflict situations in a multi-digital twin environment. For this, this digital network twin abstraction interface 13 may introduce four new modules: Priority Mapping Module 16, Physical Resource Mapping Module 17, Control Commands Runtime Execution 18, and Admission Control Module 19. The idea is first to map twin operation intents 20 to physical physical ressources 21 comprising physical infrastructures of the physical system 5 so that potential conflicts and inefficient usages of the physical ressources 21 may be avoided. For instance, to avoid oscillation effects due to conflicting updates between digital twin operators 1, 2 as shown in FIG 3, the twin abstraction interface 13 may guarantee that no such conflict may arise after an intent mapping process.

A core operation and management module 22 may forward the twin operation intents 20 to the admission control module 19. The admission control module 10 then interacts with the priority mapping module 16 and the physical resource mapping module 17 to verify intent priorities 23 and resource mapping of the physical resources 21 of the physical system 5 to the twin operation intents 20. The core operation and management module 22 then interacts with the admission control module 19 to resolve the mapping requests of the twin operation intents 20. For example, twin operation intents 20 that are not immediately mapped may be placed in wait queues within the admission control module 19.

The priority mapping module 16 may be configured as a module that maps twin operation intents 20 to intent priorities 23.

If the intent priorities 23 are used, at least two priority labels of the intent priorities 23 are configured.

The physical resource mapping module 17 may be configured as a module that maps twin operation intents 20 to physical disjoint resources 21, if possible.

The control command runtime execution module 18 may implement the required functions at runtime.

Then admission control module 19 may be configured as a module that contains a backlog of twin operation intent 20 requests. The admission control module 19 may control an admission for twin operators 1, 2 based on their twin operation intents 20.

A procedure may be provided that makes one digital network operator 1 the primary operator of the physical counterparts and the other digital network twin operators 2 listeners only.

The Priority Mapping Module 16 may be configured to automatically map all twin operation intents 20 to intent priorities 23. In this case, the Priority Mapping Module 16 proceeds to find valid intent priorities 23.

The priority mapping module 16 may map the given twin operation intent 20 to the intent priorities 23. If the twin operation intents 20 contain a requested priority 24, the priority mapping module 16 may use the requested priority 24 as the intent priority 23. If the operation intents 20 do not contain requested priorities 24, the priority mapping module 16 may resolves the intent priority 23 based on a given task of the twin operation intents 20. For example, if a task has a deadline, the priority mapping module 16 may check whether other currently embedded twin operation intents 20 must or may be changed to satisfy the requested twin operation intent 20 within the deadline. The priority mapping module 16 may interact with the physical resource mapping module 21 or, if the twin operation intent 20 involves a task that affects human operations, this twin operation intent 20 may also given a high intent priority 23 due to its safety-critical nature. The priority mapping module 16 may coordinate with the physical resource mapping module 17 to create intent mappings.

The Physical Resource Mapping module 17 maps the twin operation intents 20 to physical resources 21 of the physical system 5. It checks which of the twin operation intents 20 may be fulfilled by which of the physical resources 21. The check also includes checking for potential decision conflicts. The following algorithm is an example of how to resolve conflicts when mapping the twin operation intents 20 to the physical resources 21, comprising physical infrastructures of the physical system 5. A dual priority system may be used. The twin operation intents 20 are assigned two priority labels of the intent priority 23 if necessary. That may be priority-label-one and priority-label-two. For priority-label-one, higher priority-label-one twin operation intents 20 will always have control over lower priority-label-one twin operation intents 20. Within a priority label class, the second priority label, priority-label-two. This priority is resolved on a first-come, first-served basis, i.e., twin operation intents 20 that enter the system first have a higher priority-label-two than twin operation intents 20 that enter the system later. The twin abstraction interface 13 always informs the twin operator 1, 2 of its intent priority 23 mappings and labels. The twin operator 1, 2 may always have the ability to manually change the mapped intent priorities 23, i.e., priority-label-one and priority-label-two. The Physical Resource Mapping module 17 may itself interact with digital network twins of existing physical network infrastructures to find an appropriate resource mapping for the digital network twin intents, i.e., it uses digital network twins to find resource mappings in a simulation-based environment using digital twins.

### Subroutine 1:

Given a current mapping of the physical resources 21 to other twin operation intents 20, this subroutine may first try to find a mapping of the physical resources 21 to the twin operation intent 20 without resource conflicts. This may include spatial solutions, wherein the physical resources are physically isolated or they are virtually isolated using e.g. slicing techniques, and temporal solutions using deadline intents before non-deadline intents or using existing time-based slicing mechanisms, e.g. as available in 5G. The implementation of the solutions at runtime may be covered by the Runtime Execution control commands.

If the twin operation intent 20 may be mapped without physical resource contention, i.e., a temporal and/or spatial solution can be found, it may be submitted to the physical system 5 and the algorithm may notify the admission control module 19 of the successful mapping.

If the twin operation intent 20 cannot be mapped without resource conflicts, it proceeds to subroutine 2, which may resolve the intent priority 23.

### Subroutine 2:

For new priority intents. If the physical resources 21 being used are serving another twin operation intent 20 with an intent priority 23, the intent priority 23 of the assigned resources is checked. If the twin operation intents 20 have the same intent priority 23, the twin operator 1 may decide whether the twin operation intent 20 should be back-logged, i.e., placed in the queue, or given a lower intent priority 23 for the second priority label. If the twin operation intents 20 have different intent priorities 23, the twin operation intent 20 with the higher intent priority 23 always gets control sovereignty in case of conflicts. If the physical resources 12 being used are serving a twin operation intent 20 with a lower intent priority 23, the twin operation intent 20 is mapped with its intent priority 23. Links of twin operation intents 20 of a lower intent priority 23 are always overridden by twin operation intents 20 of a higher intent priority 23.

If a twin operation intent 20 receives a lowest intent priority 23, the twin operator 1, 2 may be informed that the twin operation intent 20 may not be served as desired. The twin operator 1, 2 may then reject or backlog its twin operation intent 20, or accept the lowest intent priority 23 mapped to its twin operation intent 20.

Furthermore, the physical Resource Mapping Module 17 may also maps the given twin operation intents 20 according to objective functions specified by the twin operators 1, 2. The design of such objective functions is not part of this disclosure. However, the following examples may be potential objective functions: number of embedded twin operation intents 20, efficient resource utilization for given twin operation intents 20, number of embedded twin operation intents 20 in conflict, or a number of twin operation intents 20 in backlog waiting queue of the admission control module 19.

The admission control module 19 may receive the twin operation intents 20. It first checks whether the twin operation intents 20 contain requested priorities 24 or not. If the twin operation intents 20 do not contain requested priorities 24, admission control module 19 may check the intent priority 23 of the twin operation intent 20 with the Priority Mapping Module 16 and the Physical Resource Mapping Module 17. The admission control module 19 may then notify the core operation and management module 22 of successful mappings. If twin operation intents 20 could not be mapped as requested, it checks with the Core Operations and Management module 22 to see one of the a digital twin operators 1, 2 agrees with the proposed operation procedure.

Optionally, the Admission Control module 19 may place twin operation intent 20 in a waiting queue. The queue may then be monitored for conflicting resources. This feedback can be derived from the Physical Resource Mapping module 17. It monitors the queue and the affected physical resources 21 until they become free to trigger the mapping of the waiting twin operation intents 20.

The Control Commands Runtime Execution module 18 translates commands from the digital twin operators 1, 2 to the mapped physical resources 21 at runtime. It may implement run-time mechanisms to resolve run-time conflicts as planned by the Physical Resource Mapping module 17 during the mapping phase.

Based on the results of the physical resource mapping module 17, there may be the following solutions:
A priority-based solution: If there are twin operation intents 20 with different intent priorities 24, control commands 25 may always be checked to see if they resolve conflicts at runtime. The control commands 25 of a twin operation intent 20 of a higher intent priority 23 are always satisfied. The control commands 25 of a twin operation intent 20 of a lower intent priority 23 are only executed if they do not cause conflicts with twin operation intents 20 of a higher intent priority 23. For example, a change in sampling rate for the digital twin 3 that does not affect twin operation intents 20 of a higher intent priority 23 can always be propagated to the physical system 5.

A time-based solution: It may be checked whether, for example, a twin operation intent 20 with a due date is currently being resolved and monitors the due date. It also checks if the physical resources 12 are shared with time-based slicing mechanisms. If so, it coordinates the update process according to the configured time slots.

A space-based solution: It checks whether the physical resources 12 are physically separated or not and, if necessary, forwards the control commands 25 to the appropriate physical resources 12. When using sophisticated slicing mechanisms, it sends the control command 25 accordingly. For example, if different queues are used, it sends commands to configure the correct queues.

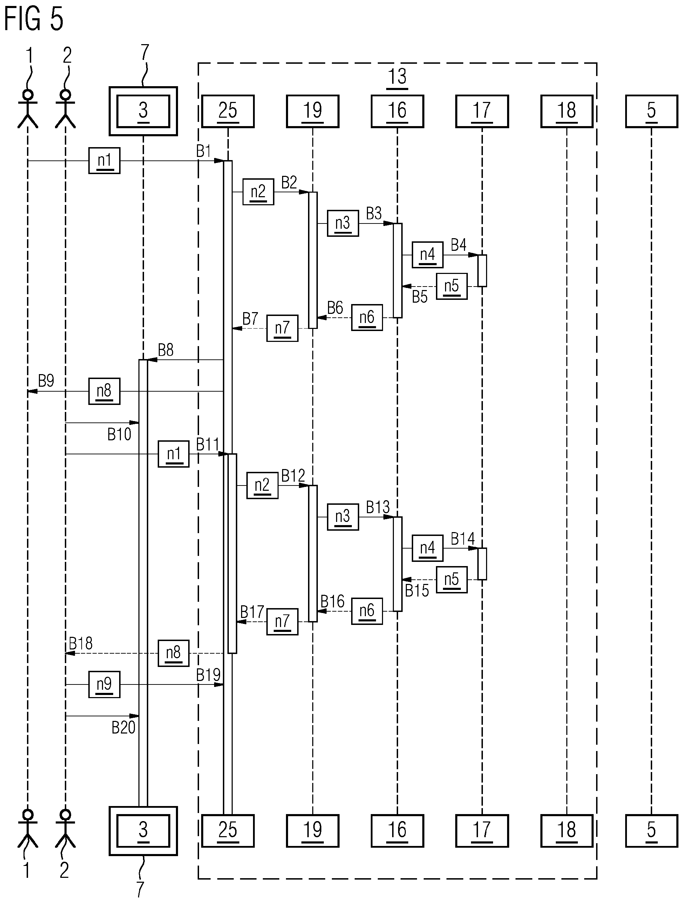

FIG 5 shows a schematic illustration of a method to configure a digital twin abstraction interface.

A step B1 may comprise a transmission of a twin operation intent request message n1 comprising a twin operation intent 20 specifying a task of a digital twin session from a first digital twin operator 1 to a network abstraction module 26 of the twin abstraction interface module 13.

A step B2 may comprise a transmission of a check admission request message n2 from the network abstraction module 26 to an admission control module 19 of the digital twin abstraction interface 13, comprising the twin operation intent 20 and a request to assign an intent priority 23 to the twin operation intent 20, wherein the intent priority 23 designates a priority of the twin operation intent 20 in an allocation of physical resources 21 of a physical system 5 represented by the digital twin 3.

A step B3 may comprise a transmission of a check priority request message n3 from the Admission Control Module 19 to a Priority Mapping Module 16 of the twin abstraction interface module 13.

The priority Mapping Module 16 may assign the twin operation intent 20 to the respective intent priority 23 based on the operation tasks of the twin operation intent 20 in a priority map. The assignment of the intent priority 23 may comprise the following steps B4 and B5.

A step B4 may comprise a transmission of a check priority and resources request message n4 from the Priority Mapping Module 16 to a Physical Resource Mapping Module 17 of the twin abstraction interface module 13 comprising a request to allocate the twin operation intent 20 to physical resources 23 of the physical system 5. The Physical Resource Mapping Module 17 may allocate the twin operation intent 20 to the physical resource 12 depending on the operation tasks of the twin operation session according to a predefined resource allocation method in a resource map.

A step B5 may comprise a transmission of a check priority and resources response message n5 from the Physical Resource Mapping Module 17 to the Priority Mapping Module 16 the check priority and resources response message n5 describing the mapping of the twin operation intent 20 to the physical resources 12. The priority Mapping Module 16 may assign the intent priority 23 to the twin operation intent 20 based on the physical resources 12 mapped to the tasks of the twin operation intent 20.

A step B6 may comprise a transmission of a check priority response message n6 from the Priority Mapping Module 16 to the Admission Control Module 19.

A step B7 may comprise a transmission of a check admission response message n7 from the Admission Control Module 19 to the network abstraction module 26, the check admission response message n7 comprising the intent priority 23 of the twin operation intent 20.

A step B8 may comprise an establishment of a twin interface between the network abstraction module 25 and a digital twin module 7 of the digital twin 3 of the digital twin session and controlling the digital twin module 7 to provide an operator interface at the digital twin module 7 for the digital twin session.

A step B9 may comprise a transmission of a twin intent response message n8 from the network abstraction module 26 to the first digital twin operator 1 comprising the intent priority 23 and interface data of the operator interface.

A step B10 may comprise a connection of the first network operator 1 to the digital twin module 7.

A step B11 may comprise a transmission of a twin operation intent request message n1 comprising a twin operation intent 20 specifying a task of a digital twin session from a second digital twin operator 1 to a network abstraction module 26 of the twin abstraction interface module 13.

A step B12 may comprise a transmission of a check admission request message n2 from the network abstraction module 26 to an admission control module 19 of the digital twin abstraction interface 13, comprising the twin operation intent 20 and a request to assign an intent priority 23 to the twin operation intent 20, wherein the intent priority 23 designates a priority of the twin operation intent 20 in an allocation of physical resources 21 of a physical system 5 represented by the digital twin 3.

A step B13 may comprise a transmission of a check priority request message n3 from the Admission Control Module 19 to a Priority Mapping Module 16 of the twin abstraction interface module 13.

The priority Mapping Module 16 may assign the twin operation intent 20 to the respective intent priority 23 based on the operation tasks of the twin operation intent 20 in a priority map. The assignment of the intent priority 23 may comprise the following steps B4 and B5.

A step B14 may comprise a transmission of a check priority and resources request message n4 from the Priority Mapping Module 16 to a Physical Resource Mapping Module 17 of the twin abstraction interface module 13 comprising a request to allocate the twin operation intent 20 to physical resources 23 of the physical system 5. The Physical Resource Mapping Module 17 may allocate the twin operation intent 20 to the physical resource 12 depending on the operation tasks of the twin operation session according to a predefined resource allocation method in a resource map.

A step B15 may comprise a transmission of a check priority and resources response message n5 from the Physical Resource Mapping Module 17 to the Priority Mapping Module 16 the check priority and resources response message n5 describing the mapping of the twin operation intent 20 to the physical resources 12. The priority Mapping Module 16 may assign the intent priority 23 to the twin operation intent 20 based on the physical resources 12 mapped to the tasks of the twin operation intent 20.

A step B16 may comprise a transmission of a check priority response message n6 from the Priority Mapping Module 16 to the Admission Control Module 19.

A step B17 may comprise a transmission of a check admission response message n7 from the Admission Control Module 19 to the network abstraction module 26, the check admission response message n7 comprising the intent priority 23 of the twin operation intent 20.

A step B18 may comprise a transmission of the twin intent response message n8 from the network abstraction module 26 to the second digital twin operator 2 comprising the intent priority 23 and interface data of the operator interface. The intent priority 23 may have a low priority. The twin intent response message n8 may comprise a request to accept the assigned intent priority 23.

A step B19 may comprise a transmission of a priority acknowledgement message n9 from the second operator 2 to the network abstraction module 26. The priority acknowledgement message n9 may comprise an acknowledgement by the second twin operator 2 of the assigned intent priority 23.

A step B20 may comprise an establishment of a connection of the second twin operator 2 to the digital twin module 7.

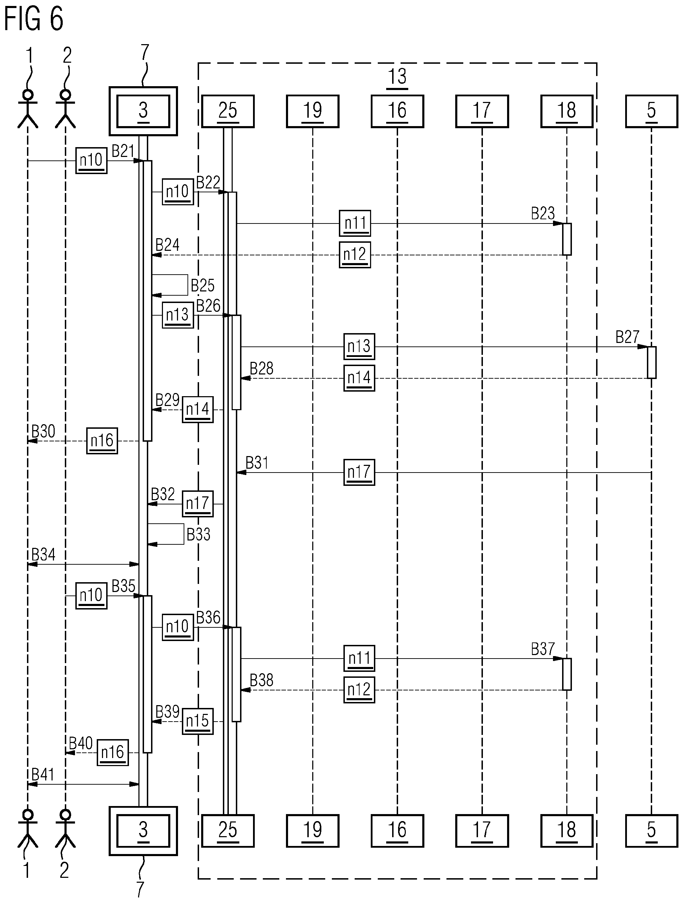

FIG 6 shows a schematic illustration of a method to operate a digital twin abstraction interface.

A step B21 may comprise a transmission of a twin control command message n10 from the first operator 1 to the digital network twin module 7 of the digital twin 3. The twin control command message n10 may comprise session update data 15 to change twin data 6 of the digital twin 3.

A step B22 may comprise a transmission of the twin control command message n10 from the digital network twin module 7 to the network abstraction module 26.

A step B23 may comprise a transmission of a check command request message n11 from the network abstraction module 26 to a Control Command Runtime Execution Module 18 and a translation of the session update data 15 to twin update data 10 as a function of a mapping configuration by the Control Command Runtime Execution Module 18.

A step B24 may comprise a transmission of a check command response message n12 from the Control Command Runtime Execution Module 18 to the digital network twin module 7, the check command response message n12 comprising the twin update data 10.

A step B25 may comprise an update of the digital twin data 6 according to the twin update data 10 by the digital twin module 7.

A step B26 may comprise a Transmission of an update physical asset request message n13 from the digital twin module 7 to the network abstraction module 26, comprising physical update data 11 to update the physical data 9 of the physical system 5 to sync the physical data 9 with the twin data 6.

A step B27 may comprise a retransmission of the update physical asset request message n13 from the network abstraction module 26 to the physical system 5 and an update of the physical data 9 of the physical system 5.

A step B28 may comprise a transmission of an update physical asset response message n14 from the physical system 5 to the network abstraction module 26.

A step B29 may comprise a retransmission of the update physical asset response message n14 from the network abstraction module 26 to the digital twin module 7.

A step B30 may comprise a transmission of a twin control command response message n16 from the digital twin module 7 to the first twin operator 1.

A step B31 may comprise a transmission of a monitoring message n17 comprising monitoring data 14 from the physical system 5 to network abstraction module 26.

A step B32 may comprise a transmission of the monitoring message n17 comprising the monitoring data 14 from the network abstraction module 26 to the digital twin module 7.

A step B33 may comprise a processing of the monitoring data 14 by digital twin module 7 comprising an update of the digital twin data 6 according to monitoring data 14.

In a step B34 the first twin operator 1 may observe the twin data 6 of the twin. The first twin operator 1 may recognise that the twin data 6 comply with his session update data 15.

A step B35 may comprise a transmission of a twin control command message n10 from the second operator 2 to the digital network twin module 7 of the digital twin 3. The twin control command message n10 may comprise a session update data 15 to change twin data 6 of the digital twin 3.

A step 36 may comprise a transmission of the twin control command message n10 from the digital network twin module 7 to the network abstraction module 26.

A step B37 may comprise a transmission of a check control command request message n11 from the network abstraction module 26 to a Control Command Runtime Execution Module 18. The Control Command Runtime Execution Module 18 may detect a conflict of the session update data 15 with the twin operation intent 20 of the first operator 1.

A step B38 may comprise a transmission of the check command response message n12 from the Control Command Runtime Execution Module 18 to the network abstraction module 26 comprising a rejection of the session update data 15.

A step B39 may comprise a transmission of a rejection message n15 from the network abstraction module 26 to the twin module 7.

A step B40 may comprise a transmission of the twin control command response message n16 from the twin module 7 to the second operator 3 comprising information about the rejection.

In a step B41 the first twin operator 1 may observe the twin data 6 of the twin 3. The first twin operator 1 may recognise that the twin data 6 comply with his session update data 15.

A digital twin is a digital representation of one or many network components, which in total represent and provide the functionality of a network. As an example, a digital twin can either be the digital representation of a single network entity such as a network switch, or it can represent parts of a network, or a whole network consisting of many network elements like switches, routers, etc. Moreover, the requested digital network twin functionality depends on the intent of the Twin operator. A user might request a full digital representation of a network, no abstraction; or a user might request a fully abstracted representation of a network, a full abstraction; or a user might request any abstract representation in-between the full abstraction and no abstraction. Generally, twin operators can use different abstraction levels of a physical network. When multiple Twin operators want to request digital twins from a shared physical infrastructure, a so-called Digital Network Twin Abstraction Layer becomes necessary. The digital twin Abstraction Layer sits between the Twin operators and the physical infrastructure. It is responsible to provide Digital Twins as a Service. This disclosure extends the Digital Network Twin Abstraction interface by methods to coordinate the decision making in case multiple Twin operators make decisions that affect physical resources of the physical system represented by their digital twins. The Twin operators do not only want to receive monitoring information about their digital twins, but also want to take decisions on how the physical counterparts of the digital twins behave and act.

This disclosure extends previous digital twin Abstraction interface modules by modules that provide a priority-based resource mapping of intents to resolve decision conflicts of multiple DNT users when being connected simultaneously to a shared physical infrastructure, e.g., via a digital twin abstraction interface. The module introduces methods to prioritize and coordinate the decision making between multiple twin operators. Based on the given twin operation intents 20 of the twin operators 1, 2, conflict situations can be resolved FIG 5 illustrates how this disclosure helps to resolve the shortcoming as illustrated in FIG 3. In step B1, the first twin operator 1 sends a twin operation intent 20 to request a twin operation session at the digital twin 3. The network abstraction module 26 may forward the twin operation intent 20 to the Admission Control Module 19. The Admission Control Module 19 checks the intent priority 23 and notes that the first twin operator 3 did not provide a requested priority 2 for the twin operation intent 20. The Priority Mapping Module 16 then interacts with the physical Resource Mapping Module to resolve the intent priority 23 and the mapping B3 to B6. Priority Mapping Module 16 decides to assign the highest intent priority 23 to the twin operation intent 20 and may notify the Admission Control Module 19 to admit the first twin operator 1 with high priority, only high and low priority is assumed here. Accordingly, the network abstraction module 26 establishes an active connection with the digital twin 3 and notifies the first twin operator 3 B8 to B9. In step B11, the second twin operator 2 sends a twin operation intent 20 to request a twin operation session at the digital twin 3.

In steps B12 to B17, the modules set the intent priority 23 of the twin operation intent 20 of the second twin operator 2 to low. The second twin operator 2 may accept the low priority offer and connects to the digital twin module 7 for listening B18 to B20.

The first twin operator 1 sends a control command message n10 to the digital twin module 7 operating the first twin 3 and the update of the twin data 6 is done B21 to B30. In B34, the current mode of operation is observed by the first twin operator 1 and accepted. The second twin operator 2 sends a control command message n10 B35, which conflicts with the twin operation intent 20 of the first twin operator, which is resolved by the Control Commands Runtime Execution module 18 B36 to B39. The second twin operator 2 is notified that the control command could not be executed to the conflict with the twin operation intent 20 of the first twin operator 1. Accordingly, the first twin operator 1 does not observe any critical operation of the digital twin 3 in step B41.

## Claims

1. Method of configuring a digital twin abstraction interface module (13) to establish a digital twin operator session to operate a digital twin (3, 4), wherein the digital twin (3, 4) is representing a physical system (5), the method comprising following steps performed by the digital twin abstraction interface module (13):
- receiving a twin operation intent request message (n1) comprising a twin operation intent (20) specifying a task of the digital twin operator session;
- mapping an intent priority (23) to the twin operation intent (20) according to a priority mapping procedure in a priority map;
- investigating a designated resource set comprising at least one physical resource (12) of the physical system (5) for accomplishing the task of the digital twin session, in a physical resource mapping procedure;
- for each of the at least one physical resource (12) of the designated resource set, creating a respective link between the respective physical resource (12) and the operation intent in a physical resource map, wherein the respective link is assigned the intent priority (23) of the twin operation intent (20); and
- initiating the digital twin operator session.

2. Method according to claim 1, wherein the priority of the twin operation intent (20) is selected in the priority mapping procedure depending on the task of the digital twin session .

3. Method according to claim 1 or 2, wherein the intent priority (23) of the twin operation intent (20) is selected depending on a requested priority (24) of the twin operation intent request message (n1).

4. Method according to any of the preceding claims, wherein the intent priority (23) of the twin operation intent (20) comprises a first label and a second label, wherein the second label designates the priority of the twin operation intent (20) within the respective first label.

5. Method according to any of the preceding claims, wherein the intent priority (23) of at least one other twin operation intent (20) is changed in the priority mapping procedure.

6. Method according to any of the preceding claims, wherein the physical resource mapping procedure comprises steps of:
- investigating the designated resource set for accomplishing the task of the digital twin session according to a primary criterion, wherein the primary criterion requires that the at least one physical resource (12) is not assigned a link in the physical resource map.

7. Method according to any of the preceding claims, wherein the physical resource (12) mapping procedure comprises steps of:
- investigating the designated resource set for accomplishing the task of the digital twin session according to a secondary criterion, wherein the secondary criterion requires that the at least one physical resource (12) is not assigned a link in the physical resource map or that the at least one physical resource (12) is assigned a link of an intent priority (23) lower than the intent priority (23) of the twin operation intent (20).

8. Method according to any of the preceding claims, wherein the physical resource (12) mapping procedure comprises steps of:
- investigating the designated resource set for accomplishing the task of the digital twin session according to a tertiary criterion, wherein the tertiary criterion requires that the at least one physical resource (12) is not assigned a link in the physical resource map or that the at least one physical resource (12) is assigned a link of an intent priority (23) lower or equal than the intent priority (23) of the twin operation intent (20).

9. Method according to any of the preceding claims, wherein the physical resource mapping procedure comprises steps of:
- reinvestigating a respective designated resource set of at least one other twin operation intent (20) being linked to the at least one physical resource (12).

10. Method of operating a digital twin abstraction interface module (13) to operate a digital twin (3, 4) in a digital twin operation session of a digital twin operation intent (20), wherein the digital twin (3, 4) is representing a physical system (5), the method comprising following steps performed by the digital twin abstraction interface module (13):
- receiving a session control command message (n10) comprising an update request to provide twin update data (10) to update twin data (6) of the digital twin according session update data (15);
- generating the twin update data (10) depending on the session update data (15) as a function of a physical resource map comprising a respective link between at least one physical resource (12) and the twin operation intent (20); and
- sending a check command response message (n12) comprising the twin update data (10) to a digital twin module providing the digital twin data (6) of the digital twin.

11. Method according to claim 10, comprising step of:
- Checking the update request for compatibility with the link between at least one physical resource (12) and the twin operation intent (20).

12. Method according to claim 10 or 11, comprising steps of:
- receiving monitoring data (14) from the physical system (5) related to physical data (9) describing a current state of the physical system (5);
- assigning the physical data (9) to the twin operation intent (20) linked to the physical resource (12),
- Transmission of the monitoring data (14) from the digital twin abstraction interface module (13) to the digital twin module (7).

13. Digital twin abstraction interface module (13) configured to establish a digital twin operator session to operate a digital twin, wherein the digital twin (3, 4) is representing a physical system (5), **characterised in that** the digital twin abstraction interface module (13) is configured to:
- receive a twin operation intent request message (n1) comprising a twin operation intent (20) specifying a task of the digital twin operator session;
- map a priority to the twin operation intent (20) according to a priority mapping procedure in a priority map;
- investigating a designated resource set comprising at least one physical resource (12) of the physical system (5) for accomplishing the task of the digital twin session, in a physical resource mapping procedure;
- for each of the at least one physical resource (12) of the designated resource set, create a respective link between the respective physical resource (12) and the operation intent in a physical resource map, wherein the respective link is assigned the intent priority (23) of the twin operation intent (20) ; and
- initiate the digital twin operator session.

14. Digital twin abstraction interface module (13) according to claim 13, **characterised in that** the digital twin abstraction interface module (13) is configured to:
- receive a session control command message (n1) comprising an update request to provide twin update data (10) to update twin data (6) of the digital twin (3, 4) according to session update data (15);
- generate the twin update data (10) depending on the session update data (15) as a function of a physical resource map comprising a respective link between at least one physical resource (12) and the twin operation intent (20); and
- send an update physical asset response message (n14) comprising the twin update data (10) to a digital twin module (7) to update the digital twin data (6) of the digital twin (3, 4) .
